Europäisches Patentamt

European Patent Office

Office européen des brevets

(19)

(11) Numéro de publication: **0 584 008 B1**

# FASCICULE DE BREVET EUROPEEN

(12)

(45) Date de publication du fascicule du brevet: **13.12.95**

(51) Int. Cl.⁶: **F16C 7/00**, B60K 5/12, F16C 7/04

(21) Numéro de dépôt: **93402038.9**

(22) Date de dépôt: **10.08.93**

(54) **Biellette de reprise de couple pour moteur de véhicule**

(30) Priorité: **14.08.92 FR 9210047**

(43) Date de publication de la demande:
**23.02.94 Bulletin 94/08**

(45) Mention de la délivrance du brevet:
**13.12.95 Bulletin 95/50**

(84) Etats contractants désignés:
**DE ES FR GB IT**

(56) Documents cités:
EP-A- 0 052 993     EP-A- 0 320 088
EP-A- 0 324 894     EP-A- 0 481 144
DE-A- 3 726 340     DE-A- 3 928 855
FR-A- 2 473 662     GB-A- 1 418 823
US-A- 4 706 946

PATENT ABSTRACTS OF JAPAN vol. 9, no.
215 (M-409)(1938) 3 Septembre 1985 & JP-
A-60 076 409 (TOYOTA) 30 Avril 1985

(73) Titulaire: **HUTCHINSON**
**2 rue Balzac**
**F-75384 Paris Cédex 08 (FR)**

(72) Inventeur: **Ciolczyk, Jean-Pierre**
**73, rue des Vignes**
**F-45120 Chalette s/Loing (FR)**
Inventeur: **Nicolas, Olivier**
**8, rue de la Tour du Sault**
**F-45200 Montargis (FR)**

(74) Mandataire: **Jacquelin, Marc-Henri et al**
**Cabinet PLASSERAUD,**
**84, rue d'Amsterdam**
**F-75440 Paris Cédex 09 (FR)**

Rank Xerox (UK) Business Services
(3.10/3.09/3.3.3)

**Description**

La présente invention concerne une biellette de reprise de couple pour moteur de véhicule, du type comportant deux tubes intérieurs rigides de liaison, d'une part au châssis du véhicule, d'autre part à son moteur, une armature extérieure creuse et rigide en matériau composite constitué d'une résine synthétique armée de fibres à haut module d'élasticité, cette armature possédant ainsi, suivant sa longueur, deux parois opposées reliées l'une à l'autre par une armature intérieure rigide, et deux plots élastiques intérieurs à faible raideur reliant lesdites parois opposées de l'armature extérieure respectivement auxdits tubes intérieurs.

Une telle biellette est connue du document EP-A-0 052 993.

Actuellement, les moteurs des véhicules sont souvent suspendus de façon pendulaire dans le châssis, et l'axe de fixation du bloc moteur est parallèle à l'axe du vilebrequin. Une biellette reliant le bloc moteur au châssis est donc nécessaire pour reprendre le couple du moteur lors de la montée ou de la descente en régime.

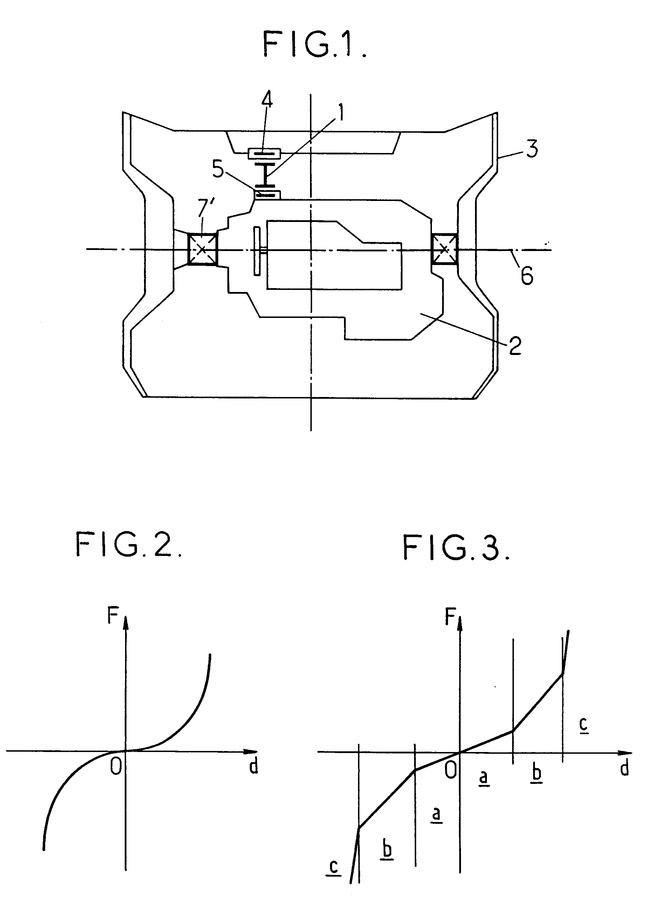

La figure 1 du dessin ci-annexé montre schématiquement l'implantation d'une telle biellette de reprise de couple, référencée 1 et reliant le bloc moteur 2 au châssis 3 du véhicule, cette biellette possédant des extrémités articulées 4 et 5. L'axe pendulaire est référencé en 6, et 7' représente des plots antivibratiles.

Une telle biellette de reprise de couple doit filtrer les vibrations du moteur, afin de ne les transmettre que le moins possible à la caisse du véhicule.

La figure 2 du dessin ci-annexé représente la courbe souhaitée des efforts (F) en fonction des déplacements (d), les efforts positifs représentant une traction, et les efforts négatifs une compression. On voit qu'autour du point O d'équilibre la raideur d'une telle biellette doit être pratiquement nulle, pour devenir rapidement très importante lorsque la valeur absolue des efforts augmente.

Dans certaines applications on aura besoin d'une courbe à double étage, comme représenté à la figure 3. On voit que dans ce cas la pente du graphique |F| = f(d) augmente brusquement à deux reprises, entre les zones (a) et (b), et entre les zones (b) et (c).

Une autre fonction essentielle des biellettes de reprise de couple est d'assurer la reprise d'un effort accidentel en traction ou en compression très important, sans se déformer [zone ci-dessus référencée (c)].

Les biellettes de reprise de couple actuelles sont constituées de multimatériaux. La courbe de rigidité est obtenue par un ou plusieurs plots en caoutchouc. L'effort maximum en traction et en compression est repris par une armature pouvant être en acier, aluminium ou technopolymère.

La généralisation des pots catalytiques entraîne une augmentation de la puissance des moteurs et une élévation de la température sous le capot du moteur. L'augmentation de la puissance des moteurs engendre une élévation de l'effort maximum qui s'exerce sur la biellette. D'autre part, les constructeurs d'automobiles souhaitent réduire le poids des véhicules sans pour autant modifier l'encombrement des organes situés sous le capot du moteur.

Il s'agit donc de trouver le meilleur compromis possible encombrement-effort maximum à la rupture-poids.

Une armature en acier permet d'obtenir une solution assez compacte mais qui est fortement pénalisée par son poids important.

Dans le cas d'une biellette à double étage de raideur avec un étage sur chaque axe, une armature en acier a l'inconvénient d'entrer en résonance pour des fréquences assez basses.

Une armature en aluminium permet de réduire le poids de la biellette par rapport à une armature en acier. Cependant l'augmentation de l'effort maximum à la rupture nécessite de la dimensionner de telle sorte qu'elle devient encombrante.

La chute des caractéristiques mécaniques des technopolymères avec la température nécessite de dimensionner l'armature de façon conséquente du point de vue de l'encombrement. On dépasse alors souvent l'encombrement alloué.

Le but de la présente invention est de résoudre le problème posé tel qu'il vient d'être exposé, en évitant tous ces inconvénients des techniques antérieures.

A cet effet, une biellette de reprise de couple conforme à l'invention, du type général défini au début, est caractérisée en ce qu'à au moins une extrémité de la biellette un alvéole est ménagé entre le plot élastique correspondant et l'extrémité correspondante de l'armature extérieure, et en ce que dans cette dernière lesdites fibres à haut module d'élasticité sont croisées et orientées, au moins pour une partie d'entre elles, selon un angle supérieur à ± 30° par rapport à l'axe de la biellette.

Ainsi, on conçoit que lesdits plots élastiques à faible raideur, c'est-à-dire en caoutchouc ou analogue, assureront la fonction de filtration des vibrations, aux alentours du point d'équilibre, et que l'armature extérieure rigide assurera la fonction de reprise des efforts dans la gamme des efforts importants, c'est-à-dire dans les zones des graphiques précités qui sont éloignées du point d'équilibre.

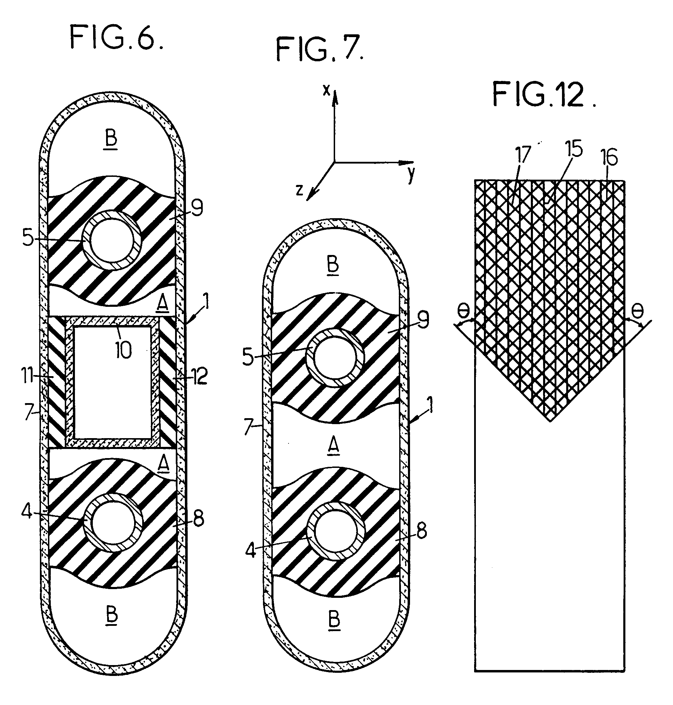

Quant à l'inclinaison des fibres croisées de l'armature extérieure, elle permettra d'améliorer de façon considérable la tenue en traction de la biellette. On a constaté en effet que si au moins 20 % des fibres sont orientées de sorte qu'elles fassent un angle d'au moins 30° avec l'axe de la biellette (direction X) il n'est pas nécessaire d'avoir de fortes épaisseurs de l'armature composite pour obtenir de bonnes caractéristiques de la biellette en traction, et l'on peut obtenir en outre une biellette ayant une faible raideur dans la direction transversale Y perpendiculaire aux tubes de liaison. La raideur de la biellette pourra également être faible dans la direction de ces tubes (direction Z) ; la raideur de la biellette après écrasement des butées, finalement, ne sera importante que dans la direction X de son axe, selon laquelle s'exercent les efforts principaux en compression et en traction (voir le système d'axes adopté X, Y, Z à la figure 7).

De préférence, une telle biellette sera encore caractérisée en ce que des alvéoles sont ménagés de part et d'autre de chacun desdits plots, respectivement entre ces plots et une armature intérieure d'une part, et entre ces plots et les extrémités de l'armature extérieure d'autre part. Cette disposition permettra d'obtenir les augmentations de raideur souhaitées (graphique de la figure 3), en fonction de l'augmentation des efforts en traction ou en compression.

Différents modes de mise en oeuvre de l'invention vont maintenant être décrits à titre d'exemples nullement limitatifs, avec référence aux autres figures du dessin ci-annexé dans lequel :

- la figure 4 est une vue en coupe axiale d'une biellette conforme à l'invention ;
- les figures 5 à 11 représentent des variantes ; et
- la figure 12 est une vue de profil avec un arrachement montrant le croisement des fibres de renforcement.

Les modes de réalisation selon les figures 7, 8 et 10 ne font pas partie de l'invention selon la revendication 1.

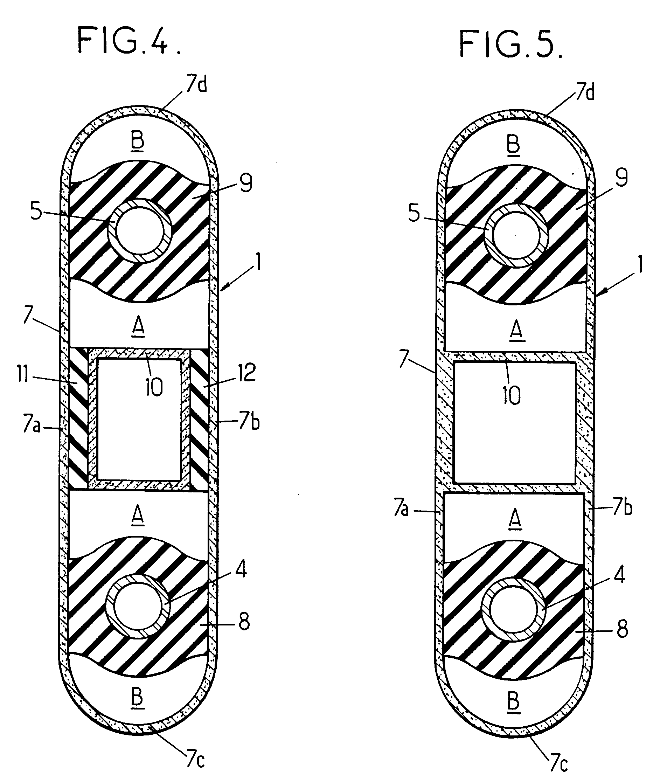

Dans le mode de réalisation de la figure 4, la référence 1 désigne encore la biellette et les références 4 et 5 des tubes rigides, par exemple en aluminium (gain de poids), qui permettent de réaliser les articulations précitées, d'une part au châssis d'un véhicule, d'autre part à son bloc moteur. L'armature extérieure rigide, référencée en 7, a la forme d'un tube aplati, présentant deux parois plates opposées 7a et 7b reliées à leurs extrémités par des portions semi-cylindriques 7c et 7d. Conformément à l'invention, deux plots élastiques intérieurs à faible raideur, par exemple en caoutchouc, référencés 8 et 9, relient respectivement les tubes 4 et 5 aux parois 7a et 7b de l'armature extérieure 7 à faible distance des extrémités de la biellette. On comprend qu'une biellette ainsi conçue, d'encombrement au demeurant extrêmement réduit, présentera bien, entre les tubes 4 et 5, la caractéristique à très faible rigidité souhaitée, pour la filtration des vibrations, tant que les efforts s'exerçant entre ces axes resteront relativement faibles. Par ailleurs, l'accroissement de ces efforts mettra en jeu, après l'écrasement des plots 8 et 9 au fond de leurs alvéoles respectifs, la très forte rigidité de l'armature extérieure 7, ce qui permettra la reprise des efforts et des à-coups très importants. Dans le mode de réalisation de la figure 4, cette reprise d'efforts est également assurée en compression par une armature intérieure rigide 10, laquelle est reliée aux parois 7a et 7b par des coussinets élastiques 11 et 12.

Avantageusement, l'armature extérieure 7 est obtenue par bobinage ou par moulage de fibres à haut module d'élasticité telles que les fibres de verre, ces fibres étant enrobées dans une résine de matière synthétique telle que la résine epoxy ou vinylester.

Comme montré sur la vue de profil de la figure 12, dans sa partie supérieure avec arrachement, les fibres de renforcement comportent une nappe de fibres 15 dirigées selon l'axe longitudinal X de la biellette, et deux nappes de fibres 16 et 17 croisées à angle droit et faisant un angle $\theta \pm 45°$ par rapport aux précédentes. Cet angle peut être différent de cette valeur, mais sera toujours supérieur à 30°, et pourra même atteindre 90°. De la sorte, on obtiendra une biellette ayant une forte résistance en traction après écrasement des butées, sans risque de cisaillement dans le plan X, Y et avec une épaisseur (dimension dans la direction Z) relativement réduite. Cela évitera le risque de rupture qui autrement pourrait se produire du fait des "bavures", ou excroissances se projetant latéralement à l'extérieur, de la matière élastique aux extrémités de la biellette sous forte contrainte, ces bavures provoquant une forte compression de l'armature extérieure dans la direction Z, blessant le composite. Ces caractéristiques de la biellette sont particulièrement intéressantes lorsqu'elle est montée avec ses axes verticaux, car les raideurs dans les directions Y et Z restent toujours très faibles, et même négligeables devant la raideur transversale des supports du moteur, ce qui est très favorable pour le filtrage des vibrations.

L'armature intérieure 10 peut être en un composite analogue et être réalisée de la même façon ou par pultrusion. On peut utiliser également un technopolymère ou même un alliage métallique, par exemple à base d'aluminium.

Quant aux plots 8, 9, ils sont adhérisés sur les tubes 4, 5 et sur les parois de l'armature 7 lors du moulage du caoutchouc ou élastomère ; il en est de même pour les coussinets 11 et 12, adhérisés entre les deux armatures 7 et 10 .

Les géométries des plots 8 et 9 peuvent être identiques ou différentes suivant la courbe de rigidité de l'ensemble de la biellette à obtenir. On peut également choisir des caoutchoucs de modules différents pour ces plots.

Il est à noter qu'avec une telle disposition, et quel que soit le mode de réalisation adopté, on peut obtenir des courbes de rigidité différentes en traction et en compression en déterminant de façon judicieuse la forme et l'emplacement des alvéoles A et B entre les plots 8, 9 et les armatures respectivement intérieure 10 et extérieure 7, puisque ces alvéoles sont destinés à être comblés en tout ou partie par la déformation des plots 8 et 9 sous l'effet des efforts axiaux.

Si l'on peut utiliser le même grade de caoutchouc pour les plots 8, 9 et les coussinets 11, 12, il n'y a alors qu'une seule opération de surmoulage de caoutchouc sur les armatures intérieure 10 et extérieure 7 et autour des axes 4 et 5. Ceci simplifie considérablement le procédé de production des biellettes.

Dans le mode de réalisation de la figure 5, les armatures extérieure 7 et intérieure 10 sont d'une pièce. Elles peuvent donc être réalisées par une même opération de bobinage, ce qui simplifie la fabrication. Dans cette figure, comme dans les suivantes, les autres références désignent les mêmes parties que dans la figure 4, ou des parties analogues.

Le mode de réalisation de la figure 6 est tout à fait analogue à celui de la figure 4 sauf que, pour illustrer ce qui a été indiqué plus haut, les alvéoles A et B sont de dimensions différentes, de sorte que la courbe de rigidité n'est pas la même en traction et en compression.

Le mode de réalisation de la figure 7 se caractérise par l'absence d'armature intérieure, ce qui permet de diminuer l'entraxe.

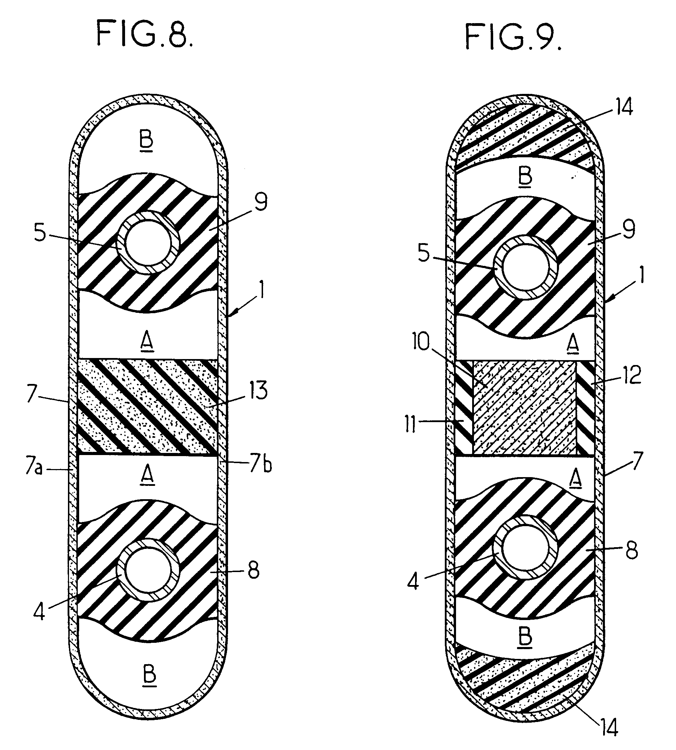

Dans le mode de réalisation de la figure 8, l'armature intérieure 10 a été remplacée par une masse d'élastomère visqueux 13, reliant les parois opposées 7a et 7b de l'armature extérieure 7, ce qui permet d'amortir efficacement les vibrations à l'intérieur de la biellette, c'est-à-dire d'obtenir un bon amortissement en compression.

Un bon amortissement en traction peut être obtenu avec le mode de réalisation de la figure 9, dans lequel des masses d'élastomère visqueux 14 occupent le fond des alvéoles B. Dans ce cas, on a représenté une armature intérieure 10 pleine.

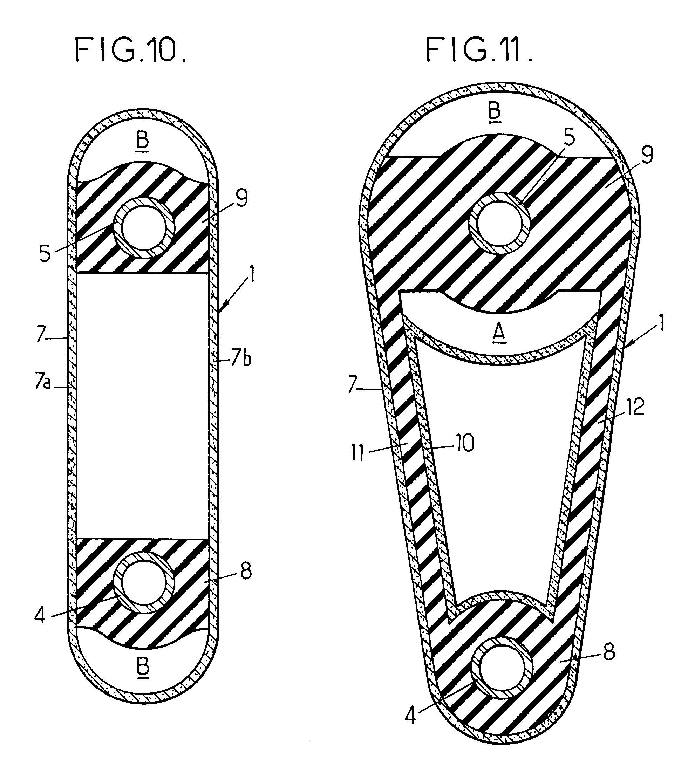

Le mode de réalisation de la figure 10 est analogue à celui de la figure 7 : il se caractérise par l'absence d'armature interne 10. Dans ce cas, l'entraxe est très important, de sorte que la biellette ne travaille qu'en traction.

Dans le mode de réalisation de la figure 11, les plots élastiques 8, 9 sont d'un seul tenant avec les coussinets 11, 12 et le plot 8 occupe tout l'espace compris entre l'armature extérieure 7 et l'armature intérieure 10, autour du tube 4. Les alvéoles A et B ne sont prévus que de part et d'autre du plot 9 qui entoure le tube d'articulation 5. C'est donc uniquement à ce niveau que l'on obtient le changement de pente de la courbe de rigidité, à la fois en compression et en traction, lorsque le caoutchouc ou élastomère du plot 9 vient remplir l'alvéole A (en compression) ou l'alvéole B (en traction).

L'invention présente, outre ceux déjà indiqués plus haut, les avantages suivants : une telle biellette en matériau composite avec plots internes à faible rigidité permet une excellente reprise de couple tout en ayant un poids et un encombrement extrêmement réduits. Il n'y a pas de problème de corrosion au niveau des axes ou tubes d'articulation 4 et 5, dès lors que ceux-ci sont en aluminium.

En outre, une telle biellette comporte peu d'éléments et est facile à fabriquer en grandes séries.

Dans le cas d'un mode de réalisation à deux étages de rigidité séparés, à savoir un étage sur chaque plot, les phénomènes de résonance de l'armature extérieure 7 sont repoussés à de plus hautes fréquences, car cette armature est plus légère (comparativement au mode de réalisation de la figure 11).

L'architecture de la biellette est aussi telle qu'elle permet de dimensionner les plots 8 et 9 pour que leur taux de déformation soit faible, ce qui augmente l'endurance de la biellette.

Enfin, on peut choisir des caoutchoucs de faible module d'élasticité pour obtenir la courbe de rigidité souhaitée.

Cela permet d'éviter la rigidification dynamique que l'on rencontre avec les caoutchoucs à module d'élasticité plus important.

Quoique l'on ait mentionné plus haut que les parois opposées 7a et 7b sont plates, il est à noter qu'elles pourraient aussi être convexes, pour une mise en tension des fibres de renforcement bobinées. De même, les portions semi-cylindriques 7c et 7d des extrêmités pourraient être remplacées par des portions de forme plus optimisée du point de vue des contraintes dans le caoutchouc des plots, par exemple une forme elliptique ou analogue.

Il y a lieu de préciser aussi que les technopolymères mentionnés plus haut sont des résines thermoplastiques renforcées par des fibres courtes, alors que l'expression "composite" désigne en principe une résine synthétique renforcée pour des fibres longues.

## Revendications

1. Biellette de reprise de couple pour moteur de véhicule, du type comportant deux tubes intérieurs rigides de liaison (4,5), d'une part au châssis (3) du véhicule, d'autre part à son moteur (2), une armature (7) extérieure creuse et rigide en matériau composite constitué d'une résine synthétique armée de fibres à haut module d'élasticité, cette armature (7) possédant ainsi, suivant sa longueur, deux parois opposées (7a, 7b) reliées l'une à l'autre par une armature intérieure rigide (10), et deux plots élastiques intérieurs (8, 9) à faible raideur reliant lesdites parois opposées (7a, 7b) de l'armature extérieure respectivement auxdits tubes intérieurs (4, 5), caractérisée en ce qu'à au moins une extrémité de la biellette un alvéole (B) est ménagé entre le plot élastique correspondant (8 ou 9) et l'extrémité correspondante (7c ou 7d) de l'armature extérieure (7), et en ce que dans cette dernière lesdites fibres à haut module d'élasticité sont croisées et orientées, au moins pour une partie d'entre elles, selon un angle ($\theta$) supérieur à ± 30° par rapport à l'axe de la biellette.

2. Biellette selon la revendication 1, caractérisée en ce que des alvéoles (A, B) sont ménagés de part et d'autre d'un seul (9) desdits plots, d'une part entre celui-ci et une armature intérieure (10), d'autre part entre lui et l'extrémité correspondante de l'armature extérieure (7).

3. Biellette selon la revendication 1, caractérisée en ce que des alvéoles (A et B) sont ménagés de part et d'autre de chacun desdits plots (8, 9), respectivement entre ces plots et une armature (10) intérieure d'une part, et entre ces plots et les extrémités (7c, 7d) de l'armature extérieure (7) d'autre part.

4. Biellette selon l'une quelconque des revendications précédentes, caractérisée en ce qu'entre lesdites parois opposées (7a, 7b) de l'armature extérieure (7) et l'armature intérieure rigide (10) sont interposés des coussinets élastiques (11, 12).

5. Biellette selon l'une quelconque des revendications précédentes, caractérisée en ce que lesdites parois opposées (7a, 7b) de l'armature extérieure (7) sont reliées l'une à l'autre par une masse d'élastomère visqueux.

6. Biellette selon l'une quelconque des revendications précédentes, caractérisée en ce qu'une masse d'élastomère visqueux (14) occupe intérieurement les extrémités de ladite armature extérieure (7).

7. Biellette selon l'une quelconque des revendications précédentes, caractérisée en ce que l'armature intérieure (10) est réalisée en technopolymère.

## Claims

1. Link for taking up torque for a vehicle engine, of the type comprising two rigid inner tubes (4, 5) for connection, on the one hand, to the chassis (3) of the vehicle and, on the other hand, to its engine (2), an outer hollow and rigid reinforcement (7) of composite material constituted by a synthetic resin reinforced with fibres having a high modulus of elasticity, the reinforcement (7) thus having, along its length, two opposed walls (7a, 7b) connected to one another by an inner rigid reinforcement (10), and two inner resilient blocks (8, 9) of low stiffness connecting the said opposed walls (7a, 7b) of the outer reinforcement to the said inner tubes (4, 5), respectively, characterized in that, at least at one end of the link, a chamber (B) is provided between the corresponding resilient block (8 or 9) and the corresponding end (7c or 7d) of the outer reinforcement (7), and in that, in the latter, the said fibres with a high modulus of elasticity are crossed and at least some of them are oriented at an angle ($\theta$) greater than ± 30° to the axis of the link.

2. Link according to Claim 1, characterized in that chambers (A, B) are provided on each side of a single block (9) of the said blocks, between the block and an inner reinforcement (10) on one side and between the block 9 and the corresponding end of the outer reinforcement (7) on the other side.

3. Link according to Claim 1, characterized in that the chambers (A and B) are provided on each side of each of the said blocks (8, 9) between these blocks and an inner reinforcement (10) on one side and between these blocks and the ends (7c, 7d) of the outer reinforcement (7) on the other side, respectively.

4. Link according to any one of the preceding claims, characterized in that resilient pads (11, 12) are interposed between the said opposed walls (7a, 7b) of the outer reinforcement (7) and the rigid inner reinforcement (10).

5. Link according to any one of the preceding claims, characterized in that the said opposed walls (7a, 7b) of the outer reinforcement (7) are connected to one another by a mass of viscous elastomer.

6. Link according to any one of the preceding claims, characterized in that a mass of viscous elastomer (14) occupies the ends of the said outer reinforcement (7) internally.

7. Link according to any one of the preceding claims, characterized in that the inner reinforcement (10) is made of a technopolymer.

**Patentansprüche**

1. Verbindungshaltestange für Fahrzeugmotoren, enthaltend zwei steife Innenrohre (4, 5), die einerseits mit der Karosserie (3) und andererseits mit dem Motor (2) des Fahrzeugs verbunden sind, eine hohle und steife Außenarmierung (7) aus Verbundmaterial, das aus einem mit Fasern hohen Elastizitätsmoduls verstärkten Kunstharz besteht, wobei diese Armierung (7) weiterhin über ihre Länge zwei einander gegenüberliegende Wände (7a, 7b) aufweist, die miteinander über eine steife Innenarmierung (10) verbunden sind, und zwei elastische Innenklötze (8, 9) geringer Steifigkeit, die die einander gegenüberliegenden Wände (7a, 7b) der Außenarmierung jeweils mit den Innenrohren (4, 5) verbinden, dadurch gekennzeichnet, daß an wenigstens einem Ende der Stange eine Zelle B zwischen dem entsprechenden elastischen Klotz (8 oder 9) und dem entsprechenden Ende (7c oder 7d) der Außenarmierung (7) ausgespart ist und daß in letztgenannter die genannten Fasern hohen Elastizitätsmoduls, zumindest zu einem Teil untereinander in einem Winkel ($\theta$) gegenüber der Stangenachse gekreuzt und ausgerichtet sind, der größer ist als +/- 30°.

2. Stange nach Anspruch 1, dadurch gekennzeichnet, daß die Zellen (A, B) beiderseits eines einzigen (9) der Klötze ausgespart sind, und zwar einerseits zwischen diesem Klotz und einer Innenarmierung (10) und andererseits zwischen diesem Klotz und dem entsprechenden Ende der Außenarmierung (7).

3. Stange nach Anspruch 1, dadurch gekennzeichnet, daß die Zellen (A und B) beiderseits eines jeden der genannten Klötze (8, 9) bzw. zwischen den Klötzen und einer Innenarmierung (10) einerseits und zwischen den Klötzen und den Enden (7c, 7d) der Außenarmierung (7) andererseits ausgespart sind.

4. Stange nach einem der vorangegangenen Ansprüche, dadurch gekennzeichnet, daß zwischen den genannten, einander gegenüberliegenden Wänden (7a, 7b) der Außenarmierung (7) und der steifen Innenarmierung (10) elastische Lager (11, 12) eingefügt sind.

5. Stange nach einem der vorangegangenen Ansprüche, dadurch gekennzeichnet, daß die einander gegenüberliegenden Wände (7a, 7b) der Außenarmierung (7) miteinander durch eine viskose Masse elastomeren Materials verbunden sind.

6. Stange nach einem der vorangegangenen Ansprüche, dadurch gekennzeichnet, daß eine viskose Masse elastomeren Materials (14) das Innere der Enden der Außenarmierung (7) einnimmt.

7. Stange nach einem der vorangegangenen Ansprüche, dadurch gekennzeichnet, daß die Innenarmierung (10) aus technopolymerem Material hergestellt ist.

# FIG.1.

# FIG.2.

# FIG.3.

# FIG.4.

# FIG.5.

# FIG.6.

# FIG.7.

# FIG.12.

# FIG.8.

# FIG.9.

# FIG.10.

# FIG.11.